# EUROPÄISCHE PATENTSCHRIFT

(11) **EP 2 694 322 B1**
(45) Veröffentlichungstag und Bekanntmachung des Hinweises auf die Patenterteilung: **01.07.2015**
(21) Anmeldenummer: 12720090.5
(22) Anmeldetag: 30.03.2012
(51) Int. Cl.: B60L 3/00, B60L 11/18, H02H 7/18, H02H 3/33, H02H 3/16, B60L 3/04

(54) **LADEEINRICHTUNG FÜR EINE HOCHSPANNUNGSBATTERIE EINES KRAFTFAHRZEUGS, LADEANORDNUNG UND VERFAHREN ZUM BETRIEB EINER LADEANORDNUNG**
CHARGING DEVICE FOR A HIGH-VOLTAGE BATTERY OF A MOTOR VEHICLE, CHARGING ASSEMBLY AND METHOD FOR OPERATING A CHARGING ASSEMBLY
DISPOSITIF DE CHARGE POUR UNE BATTERIE HAUTE TENSION D'UN VÉHICULE AUTOMOBILE, SYSTÈME DE CHARGE ET PROCÉDÉ DE FONCTIONNEMENT D'UN SYSTÈME DE CHARGE

(30) Priorität: 08.04.2011 DE 102011016539
(43) Veröffentlichungstag der Anmeldung: 12.02.2014
(73) Patentinhaber: Audi AG, 85045 Ingolstadt (DE)
(72) Erfinder: THÖMMES, Marco, 85049 Ingolstadt (DE); FELKEL, Thomas, 85049 Ingolstadt (DE)
(74) Vertreter: Herbst, Matthias Heinz
(86) Internationale Anmeldenummer: PCT/EP2012/001418
(87) Internationale Veröffentlichungsnummer: WO 2012/136336

(56) Entgegenhaltungen:
- GB-A- 2 270 770
- JP-A- 2000 270 463

## Beschreibung

Die Erfindung betrifft eine Ladeeinrichtung für eine Hochspannungsbatterie eines Kraftfahrzeuges, insbesondere eine in einem Kraftfahrzeug verbaute Ladeeinrichtung, wobei die Ladeeinrichtung über eine Verbindungseinrichtung mit einem Wechselstromnetz verbindbar ist, welche Verbindungseinrichtung einen einen Fehlerstrom wenigstens einer Fehlerstromart, nämlich einen Gleichfehlerstrom, nicht erfassenden Fehlerstromschutzschalter umfasst. Daneben betrifft die Erfindung eine Ladeanordnung mit einer solchen Ladeeinrichtung und einer Verbindungseinrichtung und ein Verfahren zum Betrieb einer Ladeanordnung.

Kraftfahrzeuge, die auch mittels elektrischer Energie betrieben werden können, sind bekannt, wobei sowohl Elektrokraftfahrzeuge, also solche, die ihre Antriebsenergie allein aus einem elektrischen Energiespeicher, insbesondere einer Hochspannungsbatterie, beziehen, als auch Hybridfahrzeuge, bei denen die Antriebsenergie neben der Hochspannungsbatterie auch aus anderen Energiequellen, insbesondere fossilen Energiequellen, gewonnen werden kann, bereits offenbart wurden.

Um die Hochspannungsbatterie eines derartigen Kraftfahrzeugs aufladen zu können, wurde vorgeschlagen, die Hochspannungsbatterie, insbesondere gemeinsam mit einer Niedrigspannungsbatterie, über ein übliches Wechselstromnetz, beispielsweise das Hausnetz des Betreibers des Kraftfahrzeugs, zu laden. Während die weiterhin vorgesehene Niedrigspannungsbatterie (auch als Bordnetzbatterie bezeichnet) üblicherweise eine Spannung von etwa 12 V aufweist, weist eine Hochspannungsbatterie eine höhere Spannung als die Niedrigspannungsbatterie auf, insbesondere eine oberhalb von 50 V liegende Spannung. Es sind auch Hochspannungsbatterien bekannt und im Einsatz, deren Batteriespannung zwischen 150 und 270 V liegt. Mithin ist eine spezielle Ladeanordnung erforderlich, um die Hochspannungsbatterie, bevorzugt die Hochspannungsbatterie und die Niedrigspannungsbatterie zu laden. Ein Ladegerät, im Folgenden als Ladeeinrichtung bezeichnet, kann dabei in das Kraftfahrzeug verbaut sein und einen Anschluss aufweisen, in den ein passender Stecker mit einem Ladekabel eingesteckt werden kann. Auf der anderen Seite wird das Ladekabel, insbesondere über eine Elektronikbox oder dergleichen, mit dem Wechselstromnetz verbunden, gegebenenfalls kann auch eine Ladesäule mit einem entsprechenden Ladekabel als Verbindung zu dem Wechselstromnetz vorgesehen sein.

Da hierbei mit hohen Spannungen und Strömen gearbeitet wird, ist es bekannt, einen Fehlerstromschutzschalter (FI-Schalter) als Schutz gegen elektrischen Schlag in der Ladeinfrastruktur, im Folgenden als Verbindungseinrichtung bezeichnet, vorzusehen. Dabei kann ein solcher Fehlerstromschutzschalter beispielsweise in der Ladesäule, einer Elektronikbox im Ladekabel oder im Stecker selber verbaut sein. Denkbar ist es auch, den FI-Schalter in oder benachbart einer Standardsteckdose des Wechselstromnetzes bereits vorzusehen. Aus Kosten- und Bauraumerwägungen ist es hierbei üblich, einen Fehlerstromschutzschalter vom Typ A (FI Typ A) zu verwenden. Es hat sich jedoch gezeigt, dass der Fehlerstromschutzschalter vom Typ A nicht alle Fehlerströme, die in der Ladeeinrichtung auftreten können, detektieren kann. Dabei handelt es sich um sogenannte Gleichfehlerströme, die allenfalls mit einem Fehlerstromschutzschalter vom Typ B detektiert werden könnten, der jedoch äußerst groß und kostenintensiv ist und daher üblicherweise eher selten verwendet wird.

JP 2000 027463 A offenbart ein Leistungsversorgungssystem, bei dem der menschliche Körper geschützt werden soll, indem ein Gleichfehlerstromdetektionsteil vorgesehen wird, welches einen Gleichfehlerstrom detektiert, welchem erlaubt wird zu fließen, wenn eine Erdung auftritt. Die Leistungsversorgung wird unterbrochen, wenn der Gleichfehlerstrom detektiert wird.

Der Erfindung liegt daher die Aufgabe zugrunde, eine Ladeeinrichtung dahingehend zu verbessern, dass eine erhöhte Sicherheit für eine Bedienperson bezüglich der von einem vorgesehenen Fehlerstromschutzschalter, insbesondere einem Fehlerstromschutzschalter vom Typ A, nicht detektierbaren Ströme besteht.

Zur Lösung dieser Aufgabe ist bei einer Ladeeinrichtung der eingangs genannten Art erfindungsgemäß vorgesehen, dass die Ladeeinrichtung eine ansteuerbare Komponente und eine Fehlerstromdetektionseinrichtung zur Detektion eines Fehlerstroms der Fehlerstromart umfasst, welche Fehlerstromdetek-tionseinrichtung zur Ansteuerung der Komponente zur Änderung der Charakteristik des Fehlerstroms derart ausgebildet ist, dass der Fehlerstrom durch den Fehlerstromschutzschalter erfassbar ist, wobei die Komponente ein Leistungsfaktorkorrekturfilter (12) ist, der durch die Ansteuerung deaktivierbar ist.

Dabei handelt es sich bei dem Fehlerstromschutzschalter insbesondere um einen Fehlerstromschutzschalter vom Typ A und entsprechend bei den nicht detektierbaren Fehlerströmen, also der wenigstens einen Fehlerstromart, um Gleichfehlerströme. Solche Gleichfehlerströme treten insbesondere im Bereich von Komponenten auf, die der Gleichrichtung nachgeschaltet sind, die zum Laden der Hochspannungsbatterie und gegebenenfalls der Niedrigspannungsbatterie benötigt wird. Die der Erfindung zugrunde liegende Idee ist es nun, den Fehlerstrom innerhalb des Ladegeräts, also der Ladeeinrichtung, zu detektieren und in Reaktion darauf die Charakteristik des Fehlerstroms derart abzuändern, dass der Fehlerstromschutzschalter, insbesondere der FI Typ A, den Fehlerstrom erkennen kann und entsprechend das System abschaltet. So kann die notwendige Sicherheit einer Ladeanordnung aufrechterhalten werden, ohne dass ein größerer und teurerer Fehlerstromschutzschalter, insbesondere ein Fehlerstromschutzschalter vom Typ B, benötigt würde.

Dabei ist die Komponente ein Leistungsfaktorkorrekturfilter (PFC - Power Factor Correction), der durch die Ansteuerung deaktivierbar ist. Dabei kann vorgesehen sein, dass zur Deaktivierung des Leistungsfaktorkorrekturfilters ein taktendes Element des Leistungsfaktorkorrekturfilters, insbesondere ein Transistor, deaktivierbar ist. Solche, meist als PFC bezeichneten Leistungsfaktorkorrekturfilter sollen den Anteil störender Oberschwingungen minimieren und damit den Leistungsfaktor möglichst nahe an 1 bringen. Dabei wird vorliegend in Ladeeinrichtungen eine Ausgestaltung als aktiver Oberschwingungsfilter eingesetzt, der dem Gleichrichter direkt nachgeschaltet ist und einen Aufwärtswandler darstellt, der die Spannung auf die benötigte Zwischenspannung, beispielsweise 450 V, anhebt. Ein solcher aktiver PFC ist ansteuerbar, nachdem ein Schalter bzw. ein Schaltnetzteil als taktendes Element des Leistungsfaktorkorrekturfilters den aufgenommenen Strom dem zeitlichen Verlauf der sinusförmig verlaufenden Netzspannung nachführt. Es hat sich nun gezeigt, dass entstehende Gleichfehlerströme, die beispielsweise nach dem PFC auftreten, nur dann die Charakteristik eines Gleichfehlerstroms aufweisen, wenn das Leistungsfaktorkorrekturfilter aktiv ist. Entsprechend wird vorgeschlagen, das Leistungsfaktorkorrekturfilter zu deaktivieren, so dass sich die Charakteristik des Fehlerstromes zu einer von dem Fehlerstromschutzschalter detektierbaren Charakteristik verändert. So kann nach Abschaltung des Leistungsfaktorkorrekturfilters auch ein Fehlerstromschutzschalter vom Typ A in der Verbindungseinrichtung den Fehlerstrom erkennen und auslösen.

In weiterer Ausgestaltung der vorliegenden Erfindung kann vorgesehen sein, dass die Fehlerstromdetektionseinrichtung als ein Residual Current Monitor (RCM) ausgebildet ist. Solche RCM sind grundsätzlich bekannt und überwachen den Differenzstrom in elektrischen Anlagen. Bei einem Überschreiten eines bestimmten Differenzstroms meldet der RCM, insbesondere über Meldekontakte, die Überschreitung dieses kritischen Wertes, so dass die Meldung dann verwendet werden kann, um durch entsprechende Ansteuerung der Komponente die Charakteristik eines detektierten Fehlerstroms geeignet zu verändern.

In diesem Zusammenhang ist es besonders vorteilhaft, wenn die Fehlerstromdetektionseinrichtung zur Detektion mehrerer, insbesondere aller Fehlerstromarten ausgebildet ist. So bildet die Fehlerstromdetektionseinrichtung eine Art Rückfallebene, wenn dann eine geeignete Veränderung von Charakteristiken stattfindet.

Neben der Ladeeinrichtung betrifft die Erfindung auch eine Ladeanordnung, umfassend eine erfindungsgemäße Ladeeinrichtung und die Verbindungseinrichtung. Sämtliche Ausführungen bezüglich der Ladeeinrichtung lassen sich analog auf die Ladeanordnung übertragen, so dass mithin auch die erfindungsgemäßen Vorteile erreicht werden können. Es sei an dieser Stelle noch angemerkt, dass der Fehlerstromschutzschalter in verschiedenen Komponenten der Verbindungseinrichtung vorgesehen sein kann, insbesondere in einer Elektronikbox, einer Ladesäule, dem Stecker, oder gar als ein Teil der Infrastruktur eines Hauses selbst, beispielsweise verbaut in einer Standardsteckdose, vorgesehen werden kann.

Schließlich betrifft die Erfindung noch ein Verfahren zum Betrieb einer Ladeanordnung, insbesondere einer erfindungsgemäßen Ladeanordnung, für eine Hochspannungsbatterie eines Kraftfahrzeugs, die mithin eine Ladeeinrichtung umfasst, die zweckmäßigerweise in einem Kraftfahrzeug selbst verbaut sein kann. Eine Verbindungseinrichtung erlaubt es, die Ladeeinrichtung zum Laden der Hochspannungsbatterie mit einem Wechselstromnetz zu verbinden, wobei die Verbindungseinrichtung einen Fehlerstromschutzschalter umfasst, der einen Fehlerstrom wenigstens einer Fehlerstromart, insbesondere einen Gleichfehlerstrom, nicht erfassen kann. Gemäß des erfindungsgemäßen Verfahrens ist nun vorgesehen, dass innerhalb der Ladeeinrichtung ein Fehlerstrom gemessen wird und bei Vorliegen eines durch den Fehlerstromschutzschalter nicht erfassbaren Fehlerstroms die Charakteristik des Fehlerstroms derart verändert wird, dass der Fehlerstrom durch den Fehlerstromschutzschalter erfasst wird. Mithin wird auch im Rahmen des erfindungsgemäßen Verfahrens ein Fehlerstrom der nicht erfassbaren Fehlerstromart in einen Fehlerstrom einer Fehlerstromart umgewandelt, die durch den Fehlerstromschutzschalter erfassbar ist, welcher mithin auslöst und die Ladeanordnung vom Wechselstromnetz trennt. Sämtliche Ausführungen bezüglich der erfindungsgemäßen Ladeeinrichtung lassen sich auch auf das erfindungsgemäße Verfahren übertragen.

Weitere Vorteile und Einzelheiten der vorliegenden Erfindung ergeben sich aus den im Folgenden dargestellten Ausführungsbeispielen sowie anhand der Zeichnung.

Dabei zeigt die einzige Figur eine Prinzipskizze einer erfindungsgemäßen Ladeanordnung.

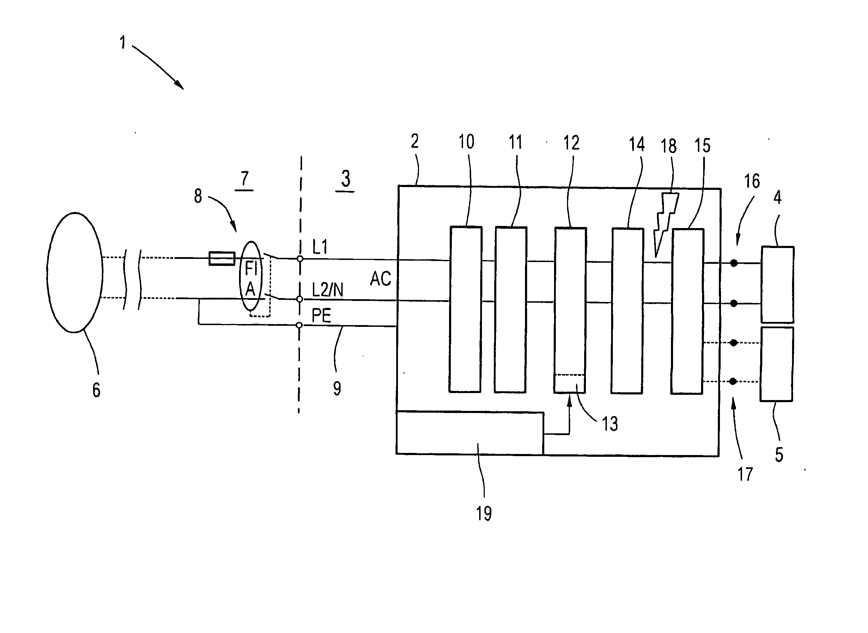

Fig. 1 zeigt eine Prinzipskizze einer erfindungsgemäßen Ladeanordnung 1. Sie besteht aus einer Ladeeinrichtung 2, die in einem nicht näher dargestellten Kraftfahrzeug 3 verbaut ist. Die Ladeeinrichtung 2 dient zum Laden einer in dem Kraftfahrzeug 3 vorgesehenen Hochspannungsbatterie 4, die im vorliegend dargestellten Beispielsfall eine Ladespannung im Bereich von 200 V benötigt. Das Kraftfahrzeug 3 umfasst ferner eine Niedrigspannungsbatterie 5 (Bordnetzbatterie), die ebenso über die Ladeanordnung 1 ladbar ist. Die Niedrigspannungsbatterie 5 arbeitet dabei mit einer Batteriespannung von 12 V, die Hochspannungsbatterie allgemein gesprochen mit einer höheren Batteriespannung.

Die Ladeeinrichtung 2 wird mit Wechselstrom aus einem üblichen Wechselstromnetz 6 betrieben, beispielsweise dem in Deutschland gängigen 220 V-Wechselstromnetz. Um das in dem Kraftfahrzeug 3 verbaute Ladegerät 2 mit dem Wechselstromnetz 6 verbinden zu können, ist eine Verbindungseinrichtung 7 vorgesehen, von der vorliegend nur schematisch die relevanten Komponenten gezeigt sind. Die Verbindungseinrichtung 7 kann ein Ladekabel umfassen, welches beidseitig mit Steckern versehen ist, wobei ein Stecker in einen entsprechenden, hier nicht näher dargestellten Anschluss der Ladeeinrichtung 2 einsteckbar ist, der andere Stecker beispielsweise in eine übliche Steckdose des Wechselstromnetzes 6. Um einen elektrischen Schlag bei einer Bedienperson zu vermeiden, umfasst die Verbindungseinrichtung einen Fehlerstromschutzschalter 8, der hier als ein Fehlerstromschutzschalter vom Typ A ausgebildet ist. Der Fehlerstromschutzschalter kann beispielsweise in einem Stecker der Verbindungseinrichtung 7, einer Elektronikbox der Verbindungseinrichtung 7, einer Ladesäule der Verbindungseinrichtung 7 oder dergleichen angeordnet sein, es ist jedoch auch möglich, ihn beispielsweise in oder benachbart einer zum Anschluss eines Ladekabels oder einer Ladesäule vorgesehenen Steckdose des Wechselstromnetzes 6 anzuordnen, welche dann für die Zwecke der vorliegenden Erfindung als Teil der Verbindungseinrichtung 7 verstanden wird.

Vorliegend wird ein einphasiges Laden dargestellt. Es sei an dieser Stelle noch darauf hingewiesen, dass, wie bei derartigen Ladeanordnungen 1 üblich, selbstverständlich auch ein Schutzleiter 9 (PE) vorgesehen ist.

Die Ladeeinrichtung 2 umfasst wie üblich zunächst einen Eingangsfilter 10, dem ein Gleichrichter 11 nachgeschaltet ist. Dem Gleichrichter 11 folgt unmittelbar ein Leistungsfaktorkorrekturfilter 12 (PFC), welches hier als aktiver PFC mit einem taktenden Element 13 realisiert ist. Das Leistungsfaktorkorrekturfilter 12 wird üblicherweise in Ladeeinrichtungen verwendet, da dann sichergestellt ist, dass eine sinusförmige Last aus der Infrastruktur entnommen wird.

Dem Leistungsfaktorkorrekturfilter 12 ist ein ZWK-Kondensator 14 (Zwischenkreis-Kondensator) nachgeschaltet. Diesem folgt wie üblich ein DC-DC-Wandler, der die an den Anschlüssen 16 und 17 benötigten Ladespannungen zur Verfügung stellt.

Mit dem Fehlerstromschutzschalter 8 vom Typ A lassen sich Gleichfehlerströme innerhalb der Ladeeinrichtung 2, beispielsweise an der Position 18, nicht detektieren. Um eine erhöhte Sicherheit zu gewährleisten, umfasst die Ladeeinrichtung 2 daher eine Fehlerstromdetektionseinrichtung 19, die Gleichfehlerströme detektieren kann. Bei der Fehlerstromdetektionseinrichtung 19 handelt es sich vorliegend um einen Residual Current Monitor (RCM). Misst dieser einen Fehlerstrom, so ist vorgesehen, dass automatisch das Leistungsfaktorkorrekturfilter 12 deaktiviert wird. Dies geschieht vorliegend, indem das taktende Element 13, das beispielsweise als ein Transistor ausgebildet werden kann, ausgeschaltet wird. Diese Deaktivierung des Leistungsfaktorkorrekturfilters 12 durch die Fehlerstromdetektionseinrichtung 19 hat zur Folge, dass sich die nicht durch den Fehlerstromschutzschalter 8 detektierbare Charakteristik des Gleichfehlerstroms derart ändert, dass eine andere Fehlerstromart an dem Fehlerstromschutzschalter 8 vorliegt, die durch diesen erfasst werden kann. Entsprechend wird der Fehlerstromschutzschalter 8 auf den durch ihn erfassten Fehlerstrom reagieren und eine Trennung vom Wechselstromnetz 6 auslösen, so dass durch den Gleichfehlerstrom kein elektrischer Schlag auftreten kann und die Sicherheit der Bedienperson sichergestellt ist.

Aus dieser Beschreibung folgt, dass die dargestellte Ladeanordnung auch zur Durchführung des erfindungsgemäßen Verfahrens ausgebildet ist.

## Patentansprüche

1. Ladeeinrichtung (2) für eine Hochspannungsbatterie (4) eines Kraftfahrzeuges (3), insbesondere in einem Kraftfahrzeug (3) verbaute Ladeeinrichtung (2), wobei die Ladeeinrichtung (2) über einen Anschluss, in den ein externer Stecker einer Verbindungseinrichtung (7) einsteckbar ist, mit einem Wechselstromnetz (6) verbindbar ist, welche Verbindungseinrichtung (7) einen einen Fehlerstrom wenigstens einer Fehlerstromart, nämlich einen Gleichfehlerstrom, nicht erfassenden Fehlerstromschutzschalter (8) umfasst,
**dadurch gekennzeichnet,**
**dass** die Ladeeinrichtung (2) eine ansteuerbare Komponente und eine Fehlerstromdetektionseinrichtung (19) zur Detektion eines Fehlerstroms der Fehlerstromart umfasst, welche Fehlerstromdetektionseinrichtung (19) zur Ansteuerung der Komponente zur Änderung der Charakteristik des Fehlerstroms derart ausgebildet ist, dass der Fehlerstrom durch den Fehlerstromschutzschalter (8) erfassbar ist, wobei die Komponente ein Leistungsfaktorkorrekturfilter (12) ist, der durch die Ansteuerung deaktivierbar ist.

2. Ladeeinrichtung nach Anspruch 1, **dadurch gekennzeichnet, dass** zur Deaktivierung des Leistungsfaktorkorrekturfilters (12) ein taktendes Element (13) des Leistungsfaktorkorrekturfilters (12), insbesondere ein Transistor, deaktivierbar ist.

3. Ladeeinrichtung nach einem der vorangehenden Ansprüche, **dadurch gekennzeichnet, dass** die Fehlerstromdetektionseinrichtung (19) als ein Residual Current Monitor ausgebildet ist.

4. Ladeeinrichtung nach einem der vorangehenden Ansprüche, **dadurch gekennzeichnet, dass** die Fehlerstromdetektionseinrichtung (19) zur Detektion mehrerer, insbesondere aller Fehlerstromarten ausgebildet ist.

5. Ladeanordnung (1), umfassend eine Ladeeinrichtung (2) nach einem der vorangehenden Ansprüche und die Verbindungseinrichtung (7).

6. Verfahren zur Betrieb einer Ladeanordnung (1) nach Anspruch 5 für eine Hochspannungsbatterie (4) eines Kraftfahrzeugs (3), **dadurch gekennzeichnet, dass** innerhalb der Ladeeinrichtung (2) ein Fehlerstrom gemessen wird und bei Vorliegen eines durch den Fehlerstromschutzschalter (8) nicht erfassbaren Fehlerstroms die Charakteristik des Fehlerstroms derart verändert wird, dass der Fehlerstrom durch den Fehlerstromschutzschalter (8) erfasst wird.

## Claims

1. Charging device (2) for a high-voltage battery (4) of a motor vehicle (3), in particular a charging device (2) installed in a motor vehicle (3), the charging device (2) being connectable to an AC network (6) by means of a connecting port, into which an external plug of a connection device (7) can be inserted, which connection device (7) comprises a residual current circuit breaker (8) which does not detect a residual current of at least one type of residual current, specifically a DC residual current, **characterised in that**
the charging device (2) comprises a controllable component and a residual current detection device (19) for detecting a residual current of said residual current type, which residual current detection device (19) is designed to control the component in order to change the characteristic of the residual current in such a way that the residual current can be detected by the residual current circuit breaker (8), the component being a power factor correction filter (12) which can be deactivated as a result of controlling said component.

2. Charging device according to claim 1, **characterised in that** a clocked element (13), in particular a transistor, of the power factor correction filter (12) can be deactivated in order to deactivate the power factor correction filter (12).

3. Charging device according to either of the preceding claims, **characterised in that** the residual current detection device (19) is designed as a residual current monitor.

4. Charging device according to any of the preceding claims, **characterised in that** the residual current detection device (19) is designed to detect a plurality of, in particular all, residual current types.

5. Charging arrangement (1) comprising a charging device (2) according to any of the preceding claims and the connection device (7).

6. Method for operating a charging arrangement (1) according to claim 5 for a high-voltage battery (4) of a motor vehicle (3), **characterised in that** a residual current is measured inside the charging device (2) and, if a residual current which cannot be detected by the residual current circuit breaker (8) is present, the characteristic of the residual current is changed in such a way that the residual current can be detected by the residual current circuit breaker (8).

## Revendications

1. Dispositif de charge (2) pour une batterie à haute tension (4) d'un véhicule automobile (3), en particulier dispositif de charge (2) monté dans un véhicule automobile (3), dans lequel le dispositif de charge (2) peut être connecté via une connexion, dans laquelle peut être enfichée un fiche mâle externe d'un dispositif de connexion (7), à un réseau de courant alternatif (6), lequel dispositif de connexion (7) comprend un interrupteur différentiel (8) ne détectant pas un courant de fuite d'au moins un type de courant de fuite, à savoir un courant de fuite continu,
**caractérisé en ce que** :
le dispositif de charge (2) comprend un composant commandable et un dispositif de détection de courant de fuite (19) pour détecter un courant de fuite du type de courant de fuite, lequel dispositif de détection de courant de fuite (19) étant conformé pour commander le composant afin de modifier la caractéristique du courant de fuite de sorte que le courant de fuite puisse être détecté par l'interrupteur différentiel (8), dans lequel le composant est un filtre correctif (12) du facteur de puissance, qui peut être désactivé par la commande.

2. Dispositif de charge selon la revendication 1, **caractérisé en ce qu'**un élément de synchronisation (13) du filtre correctif (12) du facteur de puissance, en particulier un transistor, peut être désactivé pour désactiver le filtre correctif (12) du facteur de puissance.

3. Dispositif de charge selon l'une quelconque des revendications précédentes, **caractérisé en ce que** le dispositif de détection de courant de fuite (19) est conformé en moniteur de courant résiduel.

4. Dispositif de charge selon l'une quelconque des revendications précédentes, **caractérisé en ce que** le dispositif de détection de courant de fuite (19) est conformé pour la détection de plusieurs courants de fuite, en particulier pour tous les types de courants de fuite.

5. Aménagement de charge (1), comprenant un dispositif de charge (2) selon l'une quelconque des revendications précédentes et le dispositif de connexion (7).

6. Procédé de fonctionnement d'un aménagement de charge (1) selon la revendication 5 pour une batterie de haute tension (4) d'un véhicule automobile (3), **caractérisé en ce que** l'on mesure à l'intérieur du dispositif de charge (2) un courant de fuite et, en présence d'un courant de fuite non détectable par l'interrupteur différentiel (8), la caractéristique du courant de fuite est modifiée de sorte que le courant de fuite soit détecté par l'interrupteur différentiel (8).
